(19) Europäisches Patentamt
European Patent Office
Office européen des brevets

(11) **EP 3 805 703 B1**

(12) **EUROPEAN PATENT SPECIFICATION**

(45) Date of publication and mention
of the grant of the patent:
**05.07.2023  Bulletin 2023/27**

(21) Application number: **19848288.7**

(22) Date of filing: **05.07.2019**

(51) International Patent Classification (IPC):
***G01C 21/26*** (2006.01)

(52) Cooperative Patent Classification (CPC):
**G01C 21/26**

(86) International application number:
**PCT/CN2019/094813**

(87) International publication number:
**WO 2020/029728 (13.02.2020 Gazette 2020/07)**

(54) **MOVEMENT TRACK RECONSTRUCTION METHOD AND DEVICE, STORAGE MEDIUM, AND ELECTRONIC DEVICE**

VERFAHREN UND VORRICHTUNG ZUR REKONSTRUKTION VON BEWEGUNGSVERFOLGUNG, SPEICHERMEDIUM UND ELEKTRONISCHE VORRICHTUNG

PROCÉDÉ ET DISPOSITIF DE RECONSTRUCTION DE TRAJECTOIRE, SUPPORT D'INFORMATIONS ET DISPOSITIF ÉLECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.08.2018  CN 201810886856**

(43) Date of publication of application:
**14.04.2021  Bulletin 2021/15**

(73) Proprietor: **Tencent Technology (Shenzhen) Company Limited**
**Shenzhen, Guangdong 518057 (CN)**

(72) Inventor: **LIU, Chun**
**Shenzhen, Guangdong 518057 (CN)**

(74) Representative: **Eisenführ Speiser Patentanwälte Rechtsanwälte PartGmbB**
**Postfach 31 02 60**
**80102 München (DE)**

(56) References cited:
**EP-A1- 3 009 990      WO-A1-2007/010317
CN-A- 102 998 684      CN-A- 103 809 195
CN-A- 104 215 249      CN-A- 106 558 219
CN-A- 108 268 960      GB-A- 2 526 806**

- **Dr Wolfgang Konle: "Track Data Smoothing for Air Traffic Simulation", 41. Jahrestagung der Gesellschaft für Informatik, 4 October 2011 (2011-10-04), XP055148834, Retrieved from the Internet: URL:http://www.user.tu-berlin.de/komm/CD/paper/100159.pdf [retrieved on 2014-10-24]**
- **Vishen Rahul ET AL: "GPS Data Interpolation: Bezier Vs. Biarcs for Tracing Vehicle Trajectory" In: "Advances in Intelligent Data Analysis XIX", 20 June 2015 (2015-06-20), Springer International Publishing, Cham 032528, XP055836345, ISSN: 0302-9743 ISBN: 978-3-540-69901-9 vol. 9156, pages 197-208, DOI: 10.1007/978-3-319-21407-8_15, Retrieved from the Internet: URL:http://dx.doi.org/10.1007/978-3-319-21407-8_15> * the whole document ***
- **WANG, Nan, et. al.: "Real time extraction and description for vehicle trace curves", Journal of Northeastern University (Natural science), vol. 20, no. 4, 30 April 1999 (1999-04-30) , pages 111-113, XP055684617, ISSN: 1005-3026**

**Description**

RELATED APPLICATION

This application claims priority to Chinese Patent Application No. 201810886856.1, filed with the China National Intellectual Property Agency on August 06, 2018 and entitled "METHOD AND APPARATUS FOR RECONSTRUCTING MOTION TRAJECTORY, STORAGE MEDIUM, AND ELECTRONIC DEVICE".

FIELD OF THE TECHNOLOGY

The present disclosure relates to the field of an electronic map, and specifically, to a method and an apparatus for reconstructing a motion trajectory, a storage medium, and an electronic device.

BACKGROUND OF THE DISCLOSURE

People's dependency on vehicle navigation keeps growing with an increase in vehicles and travel demands. Accurate positioning in navigation has become the most important factor when people select a vehicle navigation device.
Generally, a conventional system for vehicle positioning relies on Global Positioning System (GPS) signals or network signals, and the GPS signals or the network signals is the only means for a positioning module in the system for vehicle positioning to obtain positioning results. A vehicle may travel to a position without GPS signals or network signals, for example, to a tunnel or an underground garage. In such case, accurate positioning is not available for the vehicle because positioning data cannot be acquired through the GPS or a network, and a positioning trajectory can only be estimated based on velocity.
Thereby, a vehicle monitoring system is technically deficient in two aspects. In one aspect, a moving vehicle is in a "temporary lost" state when entering an area in which there is no positioning signal or a weak vehicle positioning signal, and the moving vehicle cannot be accurately positioned since no accurate vehicle positioning signal can be obtained. In another aspect, a civilian terminal for vehicle navigation is equipped with a positioning chip of low positioning accuracy, and thereby a vehicle monitoring center receives drifting positioning data (that is, the vehicle location data reflecting a current position of the vehicle that deviates from an actual position of the vehicle) inevitably. Consequently, in a system for monitoring a vehicle travelling trajectory, a vehicle travelling route displayed on a monitoring interface deviates from an actual vehicle travelling trajectory. A vehicle driver is misdirected, reducing navigation experience of a user.
Currently, there is no effective solution in addressing the foregoing problem.
Vishen Rahul et al., "GPS Data Intropolation: Bezier Vs. Biarcs for Tracing Vehicle Trajectory", in Advances in Intelligent Data Analysis XIX, 20 June 2015, and Patent Application GB 2526806 A both disclose using segments defined by adjacent positioning points, i.e. a solution without optimizing segmentation of the reconstructed trajectory. Wolfgang Konle, "Track Data Smoothing for Air Traffic Simulation", in 41. Jahrestagung der Gesellschaft fur Informatik, 4 October 2011, and Patent Application WO 2007/010317 A1 both propose a means of reconstructing trajectory, in which segmentation is controlled by pre-fitting attributes of original positioning data, such as positioning time and velocity, or by a deviation between pre-fitting data and post-fitting curves. Nevertheless, road geometry is not considered in the segmentation in either document.

SUMMARY

A method for reconstructing a motion trajectory, a storage medium, and an electronic device are provided according to embodiments of the present disclosure provide, in order to address at least the technical problem of low accuracy in reconstructing a motion trajectory of a vehicle in conventional technology.
The invention is set out in the appended set of claims.

BRIEF DESCRIPTION OF THE DRAWINGS

The drawings illustrated herein provide further understanding of the present disclosure, and form a part of the present disclosure. Exemplary embodiments of the present disclosure and description thereof are intended for explaining the present disclosure, and do not constitute any inappropriate limitation to the present disclosure. The drawings are as follows.

Figure 1 is a schematic diagram of a hardware environment of a method for reconstructing a motion trajectory according to an embodiment of the present disclosure;

Figure 2 is a flowchart of a method for reconstructing a motion trajectory according to an embodiment of the present disclosure;

Figure 3 is a flowchart of another method for reconstructing a motion trajectory according to an embodiment of the present disclosure;

Figure 4 is a schematic diagram of a filtering result according to an embodiment of the present disclosure;

Figure 5 is a schematic diagram of an optimal trajectory according to an embodiment of the present disclosure;

Figure 6 is a schematic diagram of an optional Euler curve according to an embodiment of the present disclosure;

Figure 7 is a schematic diagram of another optimal trajectory according to an embodiment of the present disclosure;

Figure 8 is a schematic diagram of a reconstructed trajectory on a map according to an embodiment of the present disclosure;

Figure 9 is a schematic diagram of trajectory adjustment in automatic drive according to an embodiment of the present disclosure;

Figure 10 is a schematic diagram of an apparatus for reconstructing a motion trajectory according to an embodiment of the present disclosure; and

Figure 11 is a structural block diagram of a terminal according to an embodiment of the present disclosure.

DESCRIPTION OF EMBODIMENTS

For those skilled in the art to better understand solutions of the present disclosure, hereinafter technical solutions in embodiments of the present disclosure are described clearly and completely in conjunction with the drawings in embodiments of the present closure.

First, some names or terms in embodiments of the present disclosure are explained as follows.

"Autonomous vehicle" is also known as a driverless vehicle, a computer driven vehicle, or a wheeled mobile robot, and is an intelligent vehicle which implements driverless driving under a computer system.

"Kalman filtering" is an algorithm that performs optimal estimation on a state of a system through a linear system-state equation and measured data that is inputted into and outputted from the system. The measured data includes an impact of noise and interference on the system, and therefore the optimal estimation may be regarded as a filtering process.

In an aspect of embodiments of the present disclosure, a method for reconstructing a motion trajectory is provided.

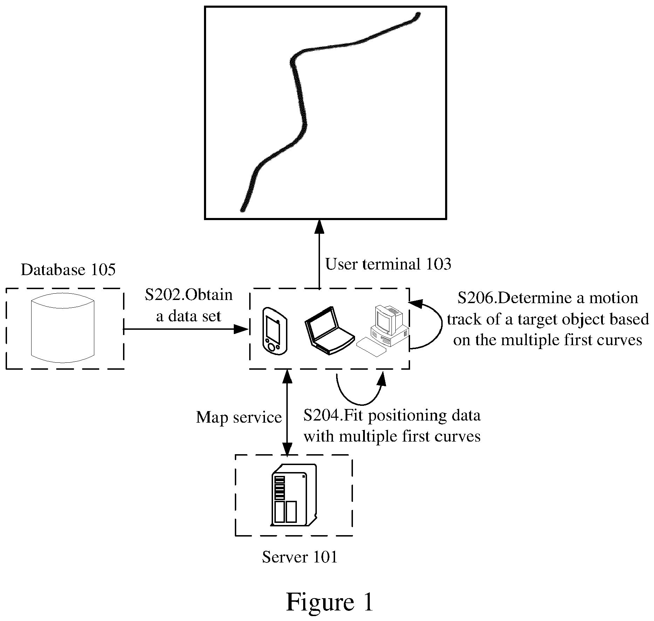

In an optional embodiment, the method for reconstructing the motion trajectory may be applied to a hardware environment as shown in Figure 1. The hardware environment includes a server 101 and/or a terminal 103. As shown in Figure 1, the server 101 is connected to the terminal 103 via a network, and the server 101 may be configured to provide a service (such as a game service, an application service, a map service or an automatic drive service) for the terminal or a client installed on the terminal. A database 105 may be provided in the server or independent from the server, and the database 105 is configured to provide a data storage service for the server 101. The network includes, but is not limited to, a wide area network, a metropolitan area network, or a local area network. The terminal 103 is not limited to a PC, a mobile phone, a tablet computer, or the like.

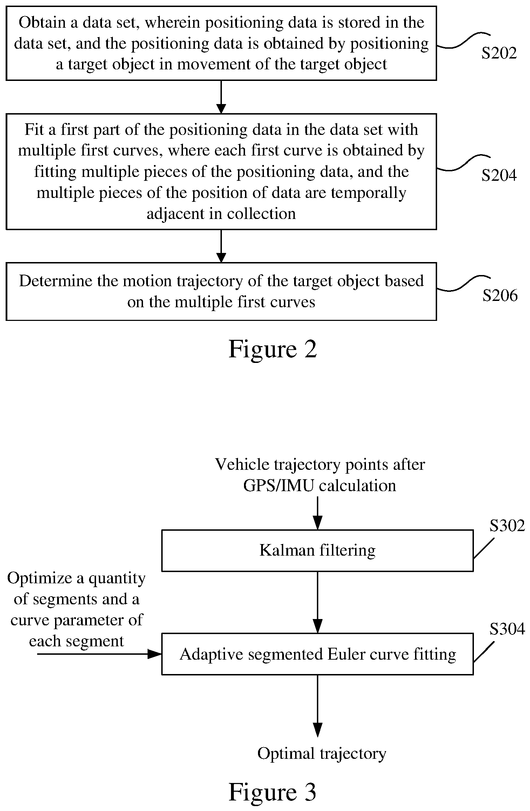

In this embodiment, the method for reconstructing the motion trajectory may be performed by the terminal 103. Figure 2 is a flowchart of a method for reconstructing a motion trajectory according to an embodiment of the present disclosure. As shown in Figure 2, the method may include following operations S202 to S206.

In operation S202, the terminal obtains a data set. Positioning data is stored in the data set, and the positioning data is obtained by positioning a target object in movement of the target object.

The terminal is an intelligent terminal moving with the target object. The target object may be a movable object such as a vehicle, a person, or an airplane. To facilitate description, hereinafter it is taken as an example that the target object is a vehicle and the intelligent terminal is a vehicle-mounted terminal.

Elements stored in the data set are the positioning data, for example, positioning data of a GPS (Global Positioning System) or inertial guidance data that are obtained by positioning a vehicle. As an example, the vehicle may be positioned at regular intervals (such as every other second) in driving, such that positioning data at multiple points on a motion trajectory of the vehicle can be acquired without positioning the vehicle continuously. Thereby, power consumption of a positioning device is reduced, and hardware consumption of the vehicle-mounted device in positioning is reduced.

In operation S204, the terminal fits a first part of the positioning data in the data set with multiple first curves. Each first curve is obtained by fitting multiple pieces of the positioning data, the multiple pieces of the position of data are temporally adjacent in collection, and a proportion of noise data in a second part of the positioning data in the data set is higher than a proportion of noise data in the first part of the positioning data in the data set.

Positioning data including no noise data or few noise data is applied when fitting the first part of the positioning data in the data set with the multiple first curves. Such data is called target data. The target data is the positioning data obtained by filtering noise out of the data set. That is, the positioning data in the data set is filtered before track reconstruction, so as to remove the positioning data belonging to the noise data (that is, the second part of the data) and keep more accurate data (that is, the first part of the positioning data). The second part of the data mainly includes the noise data, and the first part of the positioning data does not include the noise data substantially. Or, the proportion (100% or close to 100%) of the noise data in the second part of the data is much greater than the proportion (0% or close to 0%) of the noise data in the first part of the positioning data. That is, in a technical solution of the present disclosure, the motion trajectory of the target object is reconstructed in segments based on the filtering. Thereby, an impact of GPS noise and data loss may be greatly reduced. An error between the reconstructed trajectory and an actual travelling data reaches industrial-level quality. The data is adaptively segmented, and a volume of to-be-processed data is effectively reduced.

In specific implementation, the terminal may determine whether each piece of the positioning data in the data set belongs to the noise data. It is appreciated that some attributes, such as a frequency spectrum, are different between the noise data and non-noise data. On such basis, it can be determined whether the positioning data belongs to the noise data by identifying the attributes, such as the frequency spectrum, of the positioning data. A piece of positioning data in the data set is filtered out of the data set, in case of being determined as the noise data, and the remaining positioning data in the data set may serve as the target data. The curve fitting refers to using a continuous curve to depict or simulate, approximately, a function relationship among coordinates represented by a group of discrete points (that is, points indicated by the positioning data) in a plane. The curve fitting is a method for approximating discrete data with an analytical expression. The curve fitting is also known as "drawing a curve", that is, an expressive method for substituting existing data into a math equation through a mathematical manner. For example, several discrete pieces of the positioning data are obtained in a manner such as sampling and experiment, and a continuous function (that is, a curve) or a denser discrete equation is derived based on the positioning data, so that the positioning data and the curve of the equation can coincide to the most extent.

In operation S206, the terminal determines the motion trajectory of the target object based on the multiple first curves.

In the foregoing embodiments, it is taken an example that the method for reconstructing the motion trajectory is performed by the terminal 103. The method for reconstructing the motion trajectory may be performed by the server 101 according an embodiment of the present disclosure. A difference lies in that an executing object is changed from the terminal 103 to the server 101. The method for reconstructing the motion trajectory may be performed by the server 101 and the terminal 103 jointly according to an embodiment of the present disclosure, where one or two of the operations (such as the operation S202) are performed by the terminal, and the remaining operations (such as operation S204 and operation S206) are performed by the server. In an embodiment of the present disclosure, the method for reconstructing the motion trajectory performed by the terminal 103 may be performed by a client (such as a client of a map application, or a client of an application with a built-in map service) installed on the terminal.

In the operations S202 to S206, noise filtering is performed on the positioning data in the data set before reconstructing the trajectory. Multiple pieces of positioning data that are temporally adjacent in collection are fitted based on the filtered positioning data, to obtain the multiple first curves. The motion trajectory of the target object may be determined based on the first curves. The filtered data is applied to reconstructing the motion trajectory. Therefore, data for reconstructing the trajectory is less disturbed by noise due to the filtering, so that the reconstructed motion trajectory may approximate an original motion trajectory better. The technical problem of low accuracy in reconstructing a motion trajectory of a vehicle in conventional technology can be addressed, and thereby a technical effect of accurately reconstructing the vehicle motion trajectory can be achieved.

In technical solutions of the present disclosure, segmented Euler transition curves (that is, the first curves) may be obtained through a filtering solution, such as the Kalman filtering. Thereby, a travelling trajectory (that is, the motion trajectory) is adaptively reconstructed. Complex geometrical trajectories of straight-line travelling, curve turning, and a linkage between the two, are effectively reconstructed under a urban road condition. An impact of GPS noise and data loss on reconstructing the track can be greatly reduced according to solutions of the present disclosure. Herein, the GPS noise mainly refers to GPS positioning information which is obtained by positioning at locations with weak GPS signals (such as a garage, an urban area with dense buildings, an underpass, and the like). The data loss mainly refers to intermittent failure in obtaining the GPS positioning information at locations lacking a GPS positioning apparatus (for example, when passing multiple sequential tunnels, the GPS positioning information cannot be acquired in the tunnels, and only weak GPS positioning information can be acquired between the tunnels). In conventional technology, there may be a large error in the reconstructed trajectory in case of the GPS noise, and the travelling trajectory cannot be restored due to insufficient positioning data in case of lacking the GPS information. Technical solutions of the present disclosure can be implemented in a case that the positioning signals such as the GPS signals are weak or missing. For example, the positioning data belonging to the noise data is filtered out, and only accurate positioning data is applied to trajectory reconstruction, in case of a large amount of noise data. A small amount of the positioning data is applied to segment reconstruction according to an embodiment of the present disclosure, and therefore the trajectory may be reconstructed based on a few GPS positioning data and inertial guidance data (where a position of the vehicle after entering a tunnel may be deduced from the GPS positioning data obtained before entering the tunnel and the acceleration measured by a inertial guidance unit of the vehicle) in case of no GPS signals. Thereby, an issue of trajectory reconstruction is addressed when GPS or other positioning signals are weak or missing. An error between the reconstructed trajectory and an actual travelling data reaches industrial-level quality. The data is adaptively segmented, and a volume of to-be-processed data is effectively reduced. Hereinafter technical solutions of the present disclosure are further described in detail with reference to the operations as shown in Figure 2.

In the operation S202, the terminal obtains the data set. The positioning data is stored in the data set, and the positioning data is obtained by positioning the target object in the movement of the target object.

In an optional embodiment, elements in the data set may be one or more of: GPS positioning data, data from an inertial navigation IMU (inertial measurement unit) (such as a tri-axial acceleration, a tri-axial angular velocity, or the like), and information from a wheel encoder (such as a measured speed of a wheel). Further, the elements in the data set may be travelling trajectory point data calculated according to information from at least one of the GPS, the inertial navigation IMU and the wheel encoder.

In the operation S204, the terminal fits, with the multiple first curves, the first part of the positioning data in the data set. Each first curve is obtained by fitting the multiple pieces of the positioning data, the multiple pieces of the position of data are temporally adjacent in collection, and the proportion of noise data in the second part of the positioning data in the data set is higher than the proportion of noise data in the first part of the positioning data in the data set.

In the foregoing embodiments, fitting the first part of the positioning data in the data set with the multiple first curves mainly includes following operation 1, operation 2, and operation 3.

In operation 1, the first part of the positioning data in the data set is fitted with multiple second curves according to a first parameter. The first parameter indicates a quantity of segments in the plurality of second curves.

The second curve and the first curve may be Euler curves. The Euler curve is a parameter curve of which a curvature varies linearly with a length of the curve. The Euler curve is defined as follows, where $b$ is a curvature at a start point (x0, y0), $a$ is a slope of the linearly varying curvature, and (vx, vy) is a unit direction vector at the start point.

$$x(s) = x0 + \int \cos(a*s*s + b*s + vx) ds$$

$$y(s) = y0 + \int \cos(a*s*s + b*s + vy) ds$$

The curvature varies based on $K = a*s + b$.

A random geometric model is used in the fitting. That is, the segmented Euler curves are applied, where the quantity of the segmented curves, the start point (x0, y0), the parameters $a$ and $b$, and the unit vector (vx, vy) may be random variables. A total fitting error is minimized by optimizing the random variables. s represents a position in a curve or a trajectory, where a curvature at the position is to be determined. ds represents a differential of the curve or the trajectory.

In an optional embodiment, fitting the first part of the positioning data in the data set with multiple second curves according to the first parameter may include following operations. The positioning data belonging to the noise data (that is, the second part of the positioning data) in the data set is filtered out, to obtain the target data (that is, the first part of the positioning data). A distance between the motion trajectory and a positioning point represented by the positioning data belonging to the noise data is greater than a distance between the motion trajectory and a positioning point represented by the positioning data not belonging to the noise data. Namely, the noise data is data with large deviation. The target data are fitted with the multiple second curves according to a quantity of segments in the plurality of second curves indicated by the first parameter.

It is taken as an example that the Kalman filtering is applied to implement the filtering. A state variable $\hat{X}_{k/(k-1)}$ at a moment k may be predicted based on an optimal estimation $X_{(k-1)}$ at a moment (k-1) (for example, positioning data at the moment k-1). Thereby, the optimal estimation $X_k$ (that is, ideal positioning data at the moment k) of a state at the moment k may be determined based on the optimal estimation at the moment (k-1) and the state variable. Such state may be further measured to obtain a measured variable $Z_k$ (that is, actual positioning data at the moment k). Then, an analysis is made between the determined estimation and the measured variable. For example, a difference between the two is compared with a certain threshold, to determine whether the measured variable is noise. The measured variable is the noise in a case that the different reaches the threshold, and otherwise the measured variable is not the noise.

In an optional embodiment, a variance between a certain piece of the positioning data and an adjacent piece of the positioning data may be calculated, and a sum of the variances with all adjacent pieces of the positioning data may be calculated. In a case that a ratio of the sum to each adjacent piece of the positioning data is greater than a certain threshold, such piece of the positioning data is determined to be the noise data (that is, belongs to the second part of the positioning data). Otherwise, such piece of the positioning data is determined not to be the noise data (that is, belongs to the first part of the positioning data).

According to the invention, it is determined whether the multiple second curves meet a target condition in a following manner. It is determined whether the multiple second curves meet a target condition, according to a data fitting parameter indicating a degree of fitting of the multiple second curves, a second parameter, a third parameter, and a fourth parameter. The second parameter is a quantity of jumps in a tangent angle at a joint between every two adjacent second curves, which exceed a first threshold. The third parameter is a quantity of jumps in a curvature at a joint between every two adjacent second curves, which exceed a second threshold. The fourth parameter is a quantity of segments in the plurality of second curves, of which a length exceeds a third threshold. The first threshold, the second threshold, and the third threshold are predetermined, and may be set according to a practical situation. For example, the first threshold is 90 degrees, the second threshold is 3, and the third threshold is 5.

The data fitting parameter may be called goodness of fit, which is a degree of fitting between a regression line (that is, a curve obtained by fitting) and the measured value (that is, the positioning data). A statistic measuring the goodness of fit is a determination coefficient $R^2$ (also known as a coefficient of determination), and a maximum value of $R^2$ is 1. A larger $R^2$ indicates a higher degree of fitting between the regression line and the measured value, and a smaller $R^2$ indicates a lower degree of fitting between the regression line and the measured value. The degree of fitting between a model and measured values of samples may be tested through the determination coefficient and a standard deviation of regression.

In an optional embodiment, determining whether the multiple second curves meet the target condition, according to the data fitting parameter of the multiple second curve, the second parameter, the third parameter, and the fourth parameter may include operations 11 to 13:

In operation 11, a first product of the data fitting parameter (or called a degree of data fitting, data_fitting) of the multiple second curves and a first weight $\alpha$ is obtained, a second product of the second parameter #angle_diff and a second weight $\beta$ is obtained, a third product of the third parameter #curvagture_diff and a third weight $\gamma$ is obtained, and a fourth product of the fourth parameter (or called a quantity of the curves of which a length exceeds an allowed maximum length, #length) and a fourth weight $\varepsilon$ is obtained. A sum of the first weight, the second weight, the third weight and the fourth weight is equal to 1.

In operation 12, it is determined that the multiple second curves do not meet the target condition, in a case that a fifth parameter is greater than a fourth threshold. The fifth parameter is a sum of the first product, the second product, the third product and the fourth product. The fourth threshold may be an empirical value, may be data obtained from experiment, and may be a value determined according to a practical situation. For example, the fourth threshold is 10.

In operation 13, it is determined that the multiple second curves meet the target condition, in a case that the fifth parameter is not greater than the fourth threshold.

In another optional embodiment, optimization may be performed according to followings operations 14 and 15, in a process of determining whether the multiple second curves meet the target condition, according to the data fitting parameter of the multiple second curves, the second parameter, the third parameter, and the fourth parameter.

In operation 14, in the case that the fifth parameter is greater than the fourth threshold, the multiple second curves are adjusted by at least one of following operations. The unit direction vector of a start point of a second curve is adjusted within a first range (that is, an angle between the adjacent curves is adjusted). The fitting parameter between a second curve and the positioning data covered by such second curve is adjusted within a second range. The curvature between adjacent second curves is adjusted within a third range. The first range is a range set for the unit direction vector, the second range is a range set for the fitting parameter, and the third range is a range set for the target curvature. In an optional embodiment, the multiple second curves may be adjusted through a random one of the above adjustments, multiple of the above adjustments, or all of the above adjustments.

In an optional embodiment, adjusting the target curvature between the adjacent second curves in the third range may include following operations. The first variable $a$ and the second variable $b$ is adjusted according to the third range. A sum of a fifth product and the second variable is determined as the target curvature K. The fifth product is a product of the first variable $a$ and the sixth parameter s (which is configured to represent a position in the curve, where the curvature at the position is to be determined).

In operation 15, the fifth parameter of the adjusted multiple second curves is obtained, and it is determined whether the adjusted multiple second curves meet the target condition based on the fifth parameter. Details may refer to the foregoing operations 11 to 13.

In a case that the operation 14 is repeated for multiple times, performing the operation 14 again may result in a parameter exceeding the corresponding range. In such case, the first parameter is adjusted, and the operations 11 to operation 15 are repeated, until an optimal manner of segmentation is found.

In operation 2, the multiple second curves are determined as the multiple first curves, in a case that the multiple second curves meet the target condition.

In operation 3, the first parameter is adjusted, and the first part of the positioning data is fitted with new multiple second curves according to the adjusted first parameter, in a case that the multiple second curves do not meet the target condition.

In the operation S206, the terminal determines the motion trajectory of the target object based on the multiple first curves.

In the foregoing embodiments, determining the motion trajectory of the target object based on the multiple first curves may include following operations. A target angle and a target curvature that are between the adjacent second curves are obtained, in the case that the multiple second curves meet the target condition. The adjacent second curves are connected according to the target angle and the target curvature between the adjacent second curves, to obtain the motion trajectory. That is, the optimal combination of the second curves is determined to be the motion trajectory.

In an optional embodiment, technical solutions of the present disclosure may be applied to the field of automatic driving. In such case, the target object is regarded as an autonomous vehicle. After the motion trajectory of the target object is determined according to the multiple first curves, a travelling status of the vehicle may be adjusted as follows according to a technical solution of the present disclosure. The travelling status of the autonomous vehicle is adjusted according to the motion trajectory and a target trajectory, such that the autonomous vehicle travels along the target trajectory after the adjustment. The target trajectory is a travelling trajectory set for the autonomous vehicle.

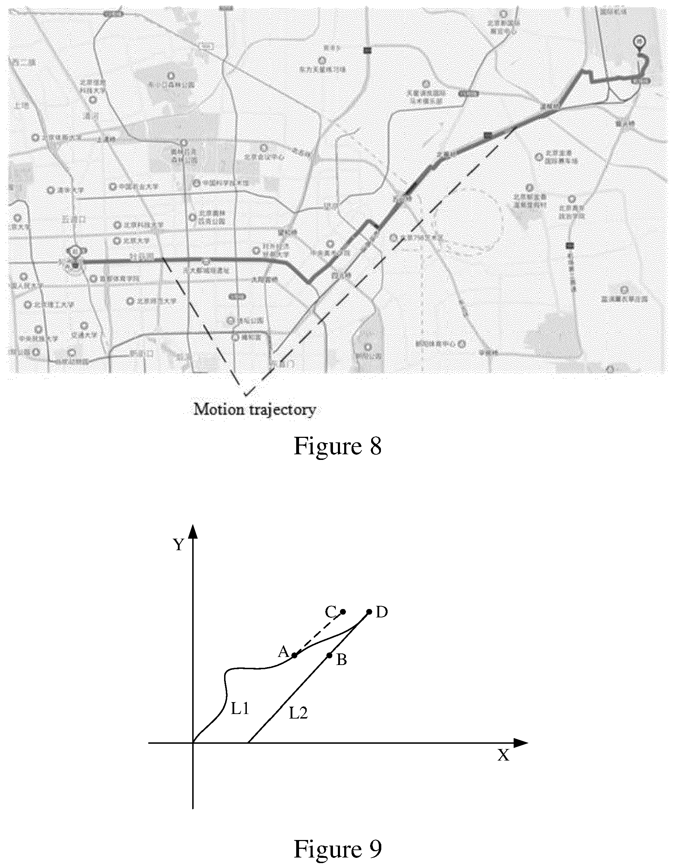

Reference is made to Figure 9. In an optional embodiment, adjusting the travelling status of the autonomous vehicle according to the motion trajectory and the target trajectory includes following operations 1 to 3.

In operation 1, a travelling speed v and an adjustment period t are obtained for the autonomous vehicle traveling along the motion trajectory L1. For example, the travelling speed may be a travelling speed at a moment A. The adjustment period may be set by a user, default in a system, set by a server, or the like.

In operation 2, a first position C and a second position D are determined according to the travelling speed and the adjustment period. The first position is a position which the autonomous vehicle reaches by traveling along the motion trajectory based on the travelling speed and the adjustment period (that is, the position C would be reached under the travelling speed d after the vehicle travels for the period t). The second position is a position on the target trajectory, and the second position and the first position have a same coordinate along a first direction. That is, a line parallel to a second direction X is drawn at the position C, and the line and the target trajectory L2 intersect with each other at the position D.

In operation 3, an acceleration $a$ of the autonomous vehicle along the second direction based on $2(x_D - x_C)/t^2$. $x_D - x_c$ is a coordinate difference, and t is the adjustment period. The coordinate difference refers to a difference between a coordinate $x_D$ of the second position and a coordinate $x_C$ of the first position along the second direction X. The second direction is different from the first direction. The travelling status of the autonomous vehicle includes the acceleration.

In an optional embodiment, the acceleration $a$ may be equal to $2(x_D - x_C)/t^2$. The vehicle may travel to the position D under the acceleration $a$, and then a speed along the second direction X due to the acceleration $a$ is reduced to zero.

This embodiment may be optimized as follows, given that it takes time to reduce the speed along the second direction X due to the acceleration $a$ to zero. The acceleration a may be equal to $4(x_D - x_C)/t^2$. The vehicle is controlled to travel for $t/2$ under the acceleration $a$ and then travel for $t/2$ an acceleration $-a$, so that no speed is generated due to the acceleration $a$ along the second direction when the vehicle reaches D. That is, the vehicle may change the original travelling trajectory AC to be AD from a position A (a position B is same as the position A in the Y axis coordinate), and finally reach the planned travelling trajectory at the position D.

Hereinafter an optional embodiment is illustrated, where it is taken as an example that a technical solution of the present disclosure is applied to reconstruction of a vehicle travelling trajectory (that is, the motion trajectory).

A mapping vehicle for a common navigation application is equipped with a vehicle-mounted differential GPS receiver, an inertial navigation module, and a wheel encoder, which are configured to record a vehicle position and manner information in a vehicle mapping operation. For a mapping vehicle with high precision, a GPS base station is usually erected near a mapping route, and some auxiliary positioning services may be applied to improve the positioning precision. Positions of the vehicle in mapping may be recovered as discrete vehicle trajectory points, based on the vehicle position, the manner information, and auxiliary positioning information.

The discrete vehicle trajectory points are often polluted by GPS observation noise. Thereby, the Kalman filtering is applied to establish a model for the vehicle travelling trajectory through a state space equation, and an impact of the noise is reduced by constraints of a motion equation. Then, curve fitting is performed under the least square principle. The measurement noise is further reduced by constraints of a curve geometric, such as continuity and smoothness, and the trajectory of the vehicle is reconstructed.

The curve for fitting may be a combination of a straight line and an arc, a segmented third-order Bezier curve, or a third order B-spline curve. A fitting method may be an iterative try-and-error method. That is, data points are fitted one by one with fitting elements of different parameters, and the fitting error is observed under a principle of the least square. A result of the fitting is obtained in case of reaching a certain fitting error or a quantity of iterative steps. Another fitting method uses all data points as observation points. A least-square error between corresponding points on the fitting curve and the observation points is calculated. A fitting curve with the minimum least-square error is obtained as a result of the fitting, by adjusting a parameter of the fitting curve.

Hence, in conventional technology, the travelling trajectory points are calculated according to information from the GPS, the inertial navigation IMU, and the wheel encoder. The measurement error in GPS is first reduced by the Kalman filtering, and then the least square method is applied for the fitting and reconstructing the travelling trajectory. The fitting curve may be a segmented curve including a combination of arcs and straight lines, a segmented third order Bezier curve, or a third order B-spline curve. In an urban environment, road conditions are complex, and road geometry is variable and fragmentized. Hence, abrupt turning due to a space constraint is quite common, which requires high flexibility of the fitting curve. Thereby, there is a large quantity of segments or a large quantity of control points in the fitting curve, resulting in a large amount of data. In addition, the urban road is subject to heavy blockage, weak GPS signals, and large noise and high loss in the vehicle trajectory points. Therefore, it is often difficult to ensure reliability and precision of the least square fitting algorithm.

There are three problems in conventional technology. In a first aspect, noise is introduced because the fitting algorithm using all data as fitting data, and data loss due to the urban environment and poor quality of the GPS signal is not considered, resulting in low reliability and low accuracy of the fitting result. In a second aspect, the urban road environment is complex. Consistency of road geometry is poor, and there are abrupt change and turning, due to ambient buildings, vegetation, terrain, and special artificial factors. Consequently, the common fitting curve includes a large quantity of segments and a large amount of data. A quality of fitting is not stable, where a smooth portion fits well and an abrupt portion fits poorly. Further, a fitting error performance is not stable. In a third aspect, the least-square fitting algorithm can only ensure a low mathematical expectation of the fitting error, and a variance of the fitting error is large. Namely, the fitting precision is sacrificed to ensure the fitting stability.

In a solution of the present disclosure, the travelling trajectory is adaptively reconstructed through a segmented Euler transition curve with assistance of the Kalman filtering. The above three problems are effectively addressed. First, points in the data are adaptively selected for the fitting in the fitting algorithm, and an impact of points with large errors on the fitting is adaptively removed by adopting a principle similar to random sampling consensus (RANSAC). Second, an element of fitting is high flexible Euler transition curves. The straight line and the arc are special cases of the Euler transition curve. The Euler transition curve is capable to fit complex road geometry without a combination of a large quantity of segmented curves, leading to a small amount of data after the fitting. Third, the fitting error is defined by a Euclidean distance, where the fitting data is directly projected to the fitting curve, and the Euclidean distance corresponds to the final fitting error directly. Optimization of the fitting reduces the fitting error and improves the fitting precision.

Such solution is suitable for reconstructing the vehicle trajectory in highly precise map acquisition in an urban environment, and establishing a model for a vehicle trajectory in automatic driving in the urban environment. Reconstructing the vehicle trajectory with this solution can improve accuracy and reliability of trajectory reconstruction effectively. Thereby, quality of data is improved for highly precise map acquisition in the urban environment, which further improves quality of the high precision map. A vehicle travelling behavior model can be built more effectively for establishing the model for vehicle trajectory, so that the automatic driving is smoother, more comfortable, and more consistent with an actual condition.

The solution mainly includes two main operations S302 and S304, and details may refer to Figure 3.

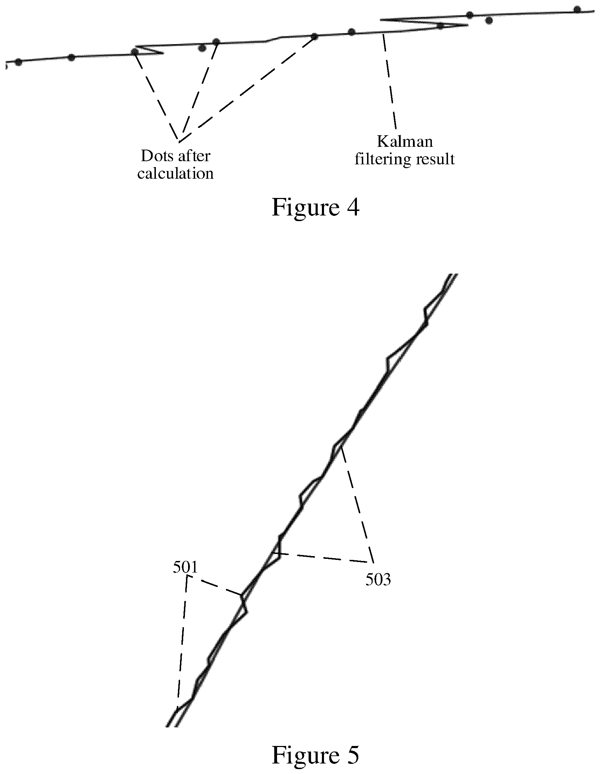

In operation S302, the Kalman filtering is performed on vehicle trajectory points (that is, in the data set) subject to GPS/IMU calculation. A result of the filtering is as shown in Figure 4, where the red dots (shown as black dots in Figure 4) are dots after the calculation, and the blue broken line (shown as the black broken line in Figure 4) is a result of the Kalman filtering.

In operation S304, adaptive segmented Euler curve fitting is performed according to an optimized quantity of segments in the plurality of curves and a parameter of each curve, to obtain an optimal trajectory curve.

Reference is made to Figure 5, where the blue line (shown as a curve 501 in Figure 5) is a result of the Kalman filtering, and the red line (shown as a curve 503 in Figure 5) is a result of the curve fitting.

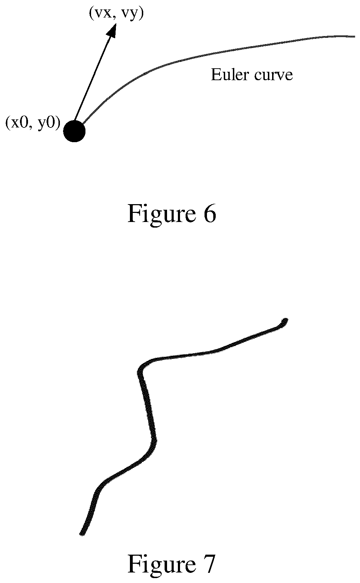

Reference is made to Figure 6. A Euler curve is a parameter curve of which a curvature varies linearly with a length of the curve. The Euler curve may be described according to following equations, where b is a curvature at a start point $(x0, y0)$, *a* is a slope of the linearly varying curvature, and $(vx, vy)$ is a unit direction vector at the start point.

$$x(s) = x0 + \int \cos(a*s*s + b*s + vx) ds$$

$$y(s) = y0 + \int \cos(a*s*s + b*s + vy) ds$$

A random geometric model is used in the fitting. That is, the segmented Euler curves are applied, where the quantity of the segmented curves, the start point $(x0, y0)$, the parameters *a* and *b,* and the unit vector $(vx, vy)$ are all random variables. A total fitting error is minimized by optimizing the random variables.

A fitting error cost function is defined as follows. Considered factors are a degree of fitting between each segmented curve and data sample points covered by such segmented curve, amplitude of a jump of a tangent vector between every two adjacent fitting curves, amplitude of a jump of a curvature between every two adjacent fitting curves, and whether the curve length is large. A specific definition may be expressed as the following equation. $\alpha$, $\beta$, $\gamma$ and $\varepsilon$ are all weight coefficients. data_fitting is the degree of data fitting. #angle_diff is a quantity of jumps of a tangent angle at a joint between adjacent segmented curves, where the jump exceeds a maximum allowable angle jump. #curvagture_diff is a quantity of jumps of a curvature at the joint between the adjacent segmented curves, where the jump exceeds a maximum allowable curvature jump. #length is a quantity of segments in the plurality of curves of which a length exceeds a maximum allowable length

$$E_1 = \alpha*\text{data\_fitting} + \beta*\#\text{angle\_diff} + \gamma*\#\text{curvagture\_diff} + \varepsilon*\#\text{length}.$$

There is a large quantity of parameters that need to be optimized, a quantity of the curves is not fixed, and a range of the parameters is large. Thereby, an overall optimization parameter has a large quantity of dimensions. In order to address the above issue, a method of reversible jump Markov chain Monte Carlo (RJMCMC) may be applied in combination with simulated annealing in an embodiment of the present disclosure.

In optimization, a fixed quantity of segments in the plurality of curves and default curve parameters are first set, and a combination of the segmented curves keeps changing to perform the optimization. A method for changing the combination of the segmented curves is as follows. An operation is randomly selected from: the segmented curves are merged and then broken, positions of connecting points between the adjacent segmented curves are changed, a direction vector of a start point of each segmented curve is changed, and the curvature parameters *a* and *b* are changed. An operation is randomly selected in each step of iteration, and it is calculated whether the fitting error cost function decreases after the changing. The function is accepted in a case that the fitting error cost function decreases, and otherwise the function is accepted or rejected based on a probability. A quantity of such iterations leads to convergence. At such time, the combination of the segmented curves is the optimal fitting curve (as shown in Figure 7), that is, the precision and the quantity of segments in the plurality of curves are both optimal

This solution can meet a requirement on reconstructing the travelling trajectory with industrial-level precision, and a requirement on highly precise map acquisition and vehicle trajectory modeling. Referring is referred to Figure 8. Quality of automatic driving products is effectively improved.

It is noted that the foregoing method embodiments are stated as a series of action combinations for concise descriptions. Those skilled in the art should know that the present disclosure is not limited to a sequence of the described actions, because some steps may be performed in another sequence or simultaneously according to an embodiment of the present disclosure. In addition, those skilled in the art should also know that all embodiments described in this specification are exemplary embodiments, and the related actions and modules may not be necessarily required in the present disclosure.

From the foregoing description, those skilled in the art may clearly appreciate that the method according to the foregoing embodiments may be implemented through software plus a necessary general hardware platform, or through hardware, and the former is preferable in many cases. Based on such understanding, an essence or a part contributing over the conventional technology, of technical solutions in the present disclosure, may be implemented as a software product. The computer software product is stored in a storage medium (such as a ROM/RAM, a magnetic disk, or an optical disc), and includes several instructions for instructing a terminal device (which may be a mobile phone, a computer, a server, a network device, and the like) to perform the method described in embodiments of the present disclosure.

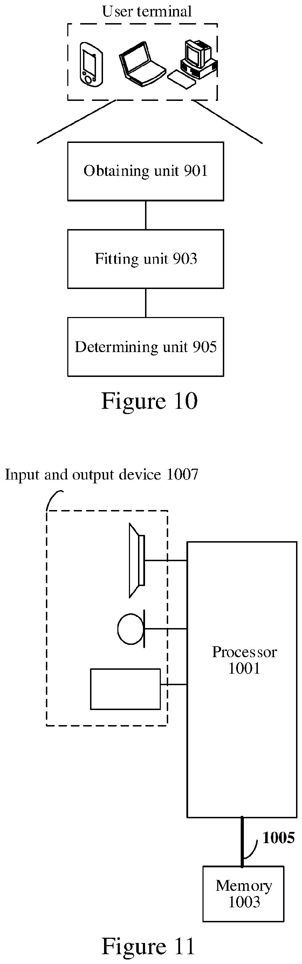

In another aspect of embodiments of the present disclosure, an apparatus for reconstructing a motion trajectory is further provided for implementing the foregoing method for reconstructing the motion trajectory. Figure 10 is a schematic diagram of an apparatus for reconstructing a motion trajectory according to an embodiment of the present disclosure. As shown in Figure 10, the apparatus may include an obtaining unit 901, a fitting unit 903, and a determining unit 905.

The obtaining unit 901 is configured to obtain a data set. Positioning data is stored in the data set, and the positioning data is obtained by positioning a target object in movement of the target object.

The terminal is an intelligent terminal moving with the target object. The target object may be a movable object such as a vehicle, a person, or an airplane. To facilitate description, hereinafter it is taken as an example that the target object is a vehicle and the intelligent terminal is a vehicle-mounted terminal.

Elements stored in the data set are the positioning data, for example, positioning data of a GPS (Global Positioning System) or inertial guidance data that are obtained by positioning a vehicle. As an example, the vehicle may be positioned at regular intervals (such as every other second) in driving, such that positioning data at multiple points on a motion trajectory of the vehicle can be acquired without positioning the vehicle continuously. Thereby, power consumption of a positioning device is reduced, and the hardware consumption of the vehicle-mounted device in positioning is reduced.

The fitting unit 903 is configured to fit a first part of the positioning data in the data set with multiple first curves. Each first curve is obtained by fitting multiple pieces of the positioning data, the multiple pieces of the position of data are temporally adjacent in collection, and a proportion of noise data in a second part of the positioning data in the data set is higher than a proportion of noise data in the first part of the positioning data in the data set.

The determining unit 905 is configured to determine the motion trajectory of the target object based on the multiple first curves.

In this embodiment, the obtaining unit 901 may be configured to perform the operation S202 in embodiments of the present disclosure, the fitting unit 903 may be configured to perform the operation S204 in embodiments of the present disclosure, and the determining unit 905 may be configured to perform the operation S206 in embodiments of the present disclosure.

In an optional embodiment, the fitting unit may include a fitting module, a first determining module, and a first adjustment module. The fitting module is configured to fit the first part of the positioning data in the data set with multiple second curves according to a first parameter. The first parameter indicates a quantity of segments in the plurality of second curves. The first determining module is configured to determine the multiple second curves as the multiple first curves, in a case that the multiple second curves meet the target condition. The first adjustment module is configured to adjust the first parameter, and fit the first part of the positioning data with new multiple second curves according to the adjusted first parameter, in a case that the multiple second curves do not meet the target condition.

The fitting unit is further configured to determine whether the multiple second curves meet a target condition in a following manner. It is determined whether the multiple second curves meet a target condition, according to a data fitting parameter of the multiple second curves, a second parameter, a third parameter, and a fourth parameter. The second parameter is a quantity of jumps in a tangent angle at a joint between every two adjacent second curves, which exceed a first threshold. The third parameter is a quantity of jumps in a curvature at a joint between every two adjacent second curves, which exceed a second threshold. The fourth parameter is a quantity of segments in the plurality of second curves, of which a length exceeds a third threshold.

In an optional embodiment, the fitting unit may include a first obtaining module, a second determining module, and a third determining module. The first obtaining module is configured to obtain a first product of the data fitting parameter of the multiple second curves and a first weight, a second product of the second parameter and a second weight, a third product of the third parameter and a third weight, and a fourth product of the fourth parameter and a fourth weight. A sum of the first weight, the second weight, the third weight and the fourth weight is equal to 1. The second determining module is configured to determine that the multiple second curves do not meet the target condition, in a case that a fifth parameter is greater than a fourth threshold. The fifth parameter is a sum of the first product, the second product, the third product and the fourth product. The third determining module is configured to determine that the multiple second curves meet the target condition, in a case that the fifth parameter is not greater than the fourth threshold.

The fitting unit may include a second adjustment module. The second adjustment module is configured to adjust the multiple second curves, in the case that the fifth parameter is greater than the fourth threshold. The adjusting includes at least one of the following operations. The unit direction vector of a start point of a second curve is adjusted within a first range. The fitting parameter between a second curve and the positioning data covered by such second curve is adjusted within a second range. The curvature between adjacent second curves is adjusted within a third range. The first range is a range set for the unit direction vector, the second range is a range set for the fitting parameter, and the third range is a range set for a target curvature. The second adjustment module is configured to obtain the fifth parameter of the adjusted multiple second curves, and determine whether the adjusted multiple second curves meet the target condition based on the fifth parameter.

In an optional embodiment, when the second adjustment module adjusts the target curvature between the adjacent second curves in the third range, the first variable and the second variable may be adjusted according to the third range. A sum of a fifth product and the second variable is determined as the target curvature. The fifth product is a product of the first variable and the sixth parameter.

When the fitting module performs data fitting the first part of the positioning data in the data set with the multiple second curves according to the first parameter, the positioning data belonging to the noise data in the data set may be filtered out, to obtain the target data. A distance between the motion trajectory and a positioning point represented by the positioning data belonging to the noise data is greater than a distance between the motion trajectory and a positioning point represented by the positioning data not belonging to the noise data. The target data are fitted with the multiple second curves.

The determining unit may further be configured to: obtain a target angle and a target curvature that are between the adjacent second curves, in the case that the multiple second curves meet the target condition; and connect the adjacent second curves according to the target angle and the target curvature between the adjacent second curves, to obtain the motion trajectory.

Examples and application scenarios for implementing the foregoing modules are same as those for implementing the corresponding operations, but are not limited to the content disclosed herein. The foregoing modules may serve as a part of the apparatus, and may be run in the hardware environment as shown in Figure 1. The foregoing modules may be implemented in software or hardware. The hardware environment includes a network environment.

In another aspect of embodiments of the present disclosure, a server or a terminal for reconstructing a motion trajectory is further provided, for implementing the foregoing method.

Figure 11 is a structural block diagram of a terminal according to an embodiment of the present disclosure. As shown in Figure 11, the terminal may include: one or more processors 1001 (only one is shown in Figure 11), a memory 1003, and a transmission apparatus 1005. As shown in Figure 11, the terminal may further include an input/output device 1007.

The memory 1003 may be configured to store a software program and a module, for example, a program instruction/module corresponding to the method and the apparatus for reconstructing a motion trajectory in embodiments of the present disclosure. The processor 1001 performs various functional applications and data processing by running the software program and the module stored in the memory 1003, so as to implement the foregoing method for reconstructing the motion trajectory. The memory 1003 may include a high speed random access memory, and may further include a non-volatile memory, for example, one or more magnetic storage apparatuses, a flash memory, or another non-volatile solid-state memory. In some embodiments, the memory 1003 may further include a memory that is remotely configured for the processor 1001, and the remote memory may be connected to a terminal via a network. Examples of the network include, but are not limited to, the Internet, an intranet, a local area network, a mobile communication network, and a combination thereof.

The transmission apparatus 1005 is configured to receive or transmit data via a network, and may be configured to transmit data between the processor and the memory. A specific example of the network may include a wired network or a wireless network. In an embodiment, the transmission apparatus 1005 includes a network interface controller (NIC). The NIC may be connected to another network device and a router via a network cable, so as to communicate with the Internet or the local network. In an embodiment, the transmission apparatus 1005 is a radio frequency (RF) module, which is configured to communicate wirelessly with the Internet.

In a specific embodiment, the memory 1003 is configured to store an application program.

The processor 1001 may invoke the application program stored in the memory 1003, through the transmission apparatus 1005, to perform following operations.

A data set is obtained, where positioning data is stored in the data set, and the positioning data is obtained by positioning a target object in movement of the target object.

A first part of the positioning data in the data set is fitted with multiple first curves, where each first curve is obtained by fitting multiple pieces of the positioning data, the multiple pieces of the position of data are temporally adjacent in collection, and a proportion of noise data in a second part of the positioning data in the data set is higher than a proportion of noise data in the first part of the positioning data in the data set.

A motion trajectory of the target object is determined based on the multiple first curves.

The processor 1001 is further configured to perform following operations.

In a case that a fifth parameter is greater than a fourth threshold, multiple second curves are adjusted by at least one of following operations: the unit direction vector of a start point of a second curve is adjusted within a first range; the fitting parameter between a second curve and the positioning data covered by such second curve is adjusted within a second range; or the curvature between adjacent second curves is adjusted within a third range; where the first range is a range set for the unit direction vector, the second range is a range set for the fitting parameter, and the third range is a range set for the target curvature.

The fifth parameter of the adjusted multiple second curves is obtained, and it is determined whether the adjusted multiple second curves meet the target condition based on the fifth parameter.

According to embodiments of the present disclosure, a data set is obtained, where positioning data is stored in the data set, and the positioning data is obtained by positioning a target object in movement of the target object. A first part of the positioning data in the data set is fitted with multiple first curves, where each first curve is obtained by fitting multiple pieces of the positioning data, the multiple pieces of the position of data are temporally adjacent in collection, and a proportion of noise data in a second part of the positioning data in the data set is higher than a proportion of noise data in the first part of the positioning data in the data set. The motion trajectory of the target object is determined based on the multiple first curves. The filtered data is applied in reconstructing the motion trajectory. Therefore, the applied positioning data includes no or few noise data, so that the reconstructed motion trajectory may approximate an original motion trajectory better. The technical problem of low accuracy in reconstructing a motion trajectory of a vehicle in conventional technology can be addressed, and thereby a technical effect of accurately reconstructing the vehicle motion trajectory can be achieved.

Detailed examples of this embodiment may refer to those described in the foregoing embodiments, and details are not described herein again.

Those skilled in the art may appreciate that the structure as shown in Figure 11 is merely an example. The terminal may be a terminal device such as a smart phone (for example, an Android mobile phone or an iOS mobile phone), a tablet computer, a palmtop computer, a mobile Internet device (MID), or a PAD. A structure of the foregoing electronic devices is not limited by what is shown in Figure 11. For example, the terminal may further include more or fewer components (for example, a network interface and a display apparatus) on a basis of what is shown in Figure 11, or have a configuration different from that shown in Figure 11.

Those skilled in the art may understand that all or some of the steps of the methods in the foregoing embodiments may be implemented by a program instructing relevant hardware of the terminal device. The program may be stored in a computer-readable storage medium. The storage medium may include a flash disk, a ROM, a RAM, a magnetic disk, an optical disc, and the like.

A storage medium is further provided according to an embodiment of the present disclosure. The storage medium stores a program code for performing a method for reconstructing a motion trajectory.

In an optional embodiment, the storage medium may be located in at least one of multiple network devices in the network described in the foregoing embodiment.

The storage medium is configured to store a program code for performing following operations.

In operation S12, a data set is obtained, where positioning data is stored in the data set, and the positioning data is obtained by positioning a target object in movement of the target object.

In operation S14, a first part of the positioning data in the data set is fitted with multiple first curves, where each first curve is obtained by fitting multiple pieces of the positioning data, the multiple pieces of the position of data are temporally adjacent in collection, and a proportion of noise data in a second part of the positioning data in the data set is higher than a proportion of noise data in the first part of the positioning data in the data set.

In operation S16, a motion trajectory of the target object is determined based on the multiple first curves.

In an optional embodiment, the storage medium is further configured to store a program code for performing following operations.

In operation S22, in a case that a fifth parameter is greater than a fourth threshold, multiple second curves are adjusted by at least one of following operations: the unit direction vector of a start point of a second curve is adjusted within a first range; the fitting parameter between a second curve and the positioning data covered by such second curve is adjusted within a second range; or the curvature between adjacent second curves is adjusted within a third range; where the first range is a range set for the unit direction vector, the second range is a range set for the fitting parameter, and the third range is a range set for the target curvature.

In operation S24, the fifth parameter of the adjusted multiple second curves is obtained, and it is determined whether the adjusted multiple second curves meet the target condition based on the fifth parameter.

Detailed examples of this embodiment may refer to those described in the foregoing embodiments, and details are not described herein again.

In an optional embodiment, the storage medium may include, but is not limited to, various media capable to store the program code, for example, a USB flash drive, a ROM, a RAM, a removable hard disk, a magnetic disk, or an optical disc.

Sequential numbers of the foregoing embodiments of the present disclosure are merely for description purpose and do not indicate preference among the embodiments.

An integrated unit in the foregoing embodiments may be stored in the foregoing computer-readable storage medium, when implemented as a software functional unit and sold or used as an independent product. Based on such an understanding, an essence or a part contributing to conventional technology of technical solutions of the present disclosure, or all or a part of technical solutions, may be implemented as a software product. The computer software product is stored in a storage medium and includes several instructions for instructing one or more computer devices (which may be a personal computer, a server, a network device, or the like) to perform all or some of steps of the methods in embodiments of the present disclosure.

Foregoing embodiments of the present disclosure lay emphasis on different aspects. A part which is not described in detail in one embodiment may refer to relevant description of another embodiment.

The client in some embodiments of the present disclosure may be implemented in other manners. The apparatus embodiments described above are merely exemplary. For example, units are merely divided according to logic functions, and may be divided in other manners in practice. For example, multiple units or components may be combined or integrated into another system, or, some features can be omitted or not performed. In addition, the displayed or discussed coupling, direct coupling, or communication connection may be indirect coupling or communication connection via some interfaces, units, or modules, and may be electrical or in other forms.

The units described as separate parts may or may not be physically separate. Components displayed as units may or may not be physical units, that is, may be located in one position or distributed among multiple network units. Some or all of the units may be selected according to a practical requirement to achieve an objective of solutions in the embodiments.

In embodiments of the present disclosure, all functional units may be integrated into one processing unit, or each functional unit may be physically independent, or two or more units are integrated into one unit. The integrated unit may be implemented as hardware or a software function unit.

Described above are merely exemplary embodiments of the present disclosure. Those skilled in the art may make various improvements and modifications within the protection scope of the invention as defined by the appended claims.

**Claims**

1. A method for reconstructing a motion trajectory, wherein the method comprises:

obtaining a data set, wherein positioning data is stored in the data set, and the positioning data is obtained by positioning a target object while the target object is in motion;
fitting target data in the data set with a plurality of first curves, wherein the target data is obtained by filtering noise data out of the data set, and the noise data is positioning data which is less accurate than the target data; and
determining the motion trajectory of the target object based on the plurality of first curves;
and **characterized in that**:
fitting target data in the data set with the plurality of first curves comprises:

fitting the target data in the data set with a plurality of second curves, according to a first parameter, wherein a first parameter is configured to indicate a quantity of segments in the plurality of second curves;
determining the plurality of second curves as the plurality of first curves, in a case that the plurality of second curves meets a target condition according to a data fitting parameter indicating a degree of fitting of the multiple second curves, a second parameter, a third parameter, and a fourth parameter; and
adjusting the first parameter, fitting the target data in the data set with a new plurality of second curves according to the adjusted first parameter, and returning to the step of determining whether the plurality of second curves meets a target condition, in a case that the plurality of second curves does not meet the target condition;
wherein the second parameter is a quantity of jumps in a tangent angle at a joint between every two adjacent second curves, which exceed a first threshold; the third parameter is a quantity of jumps in a curvature at a joint between every two adjacent second curves, which exceed a second threshold; the fourth parameter is a quantity of segments in the plurality of second curves, of which a length exceeds a third threshold.

2. The method according to claim 1, wherein the second curves and the first curves are Euler curves.

3. The method according to claim 2, wherein determining whether the plurality of second curves meets the target condition according to the data fitting parameter of the plurality of second curves, the second parameter, the third parameter, and the fourth parameter comprises:

obtaining a first product of the data fitting parameter of the plurality of second curves and a first weight, a second product of the second parameter and a second weight, a third product of the third parameter and a third weight, and a fourth product of the fourth parameter and a fourth weight wherein a sum of the first weight, the second weight, the third weight, and the fourth weight is equal to 1;
determining that the plurality of second curves does not meet the target condition, in a case that a fifth parameter is greater than a fourth threshold, wherein the fifth parameter is a sum of the first product, the second product, the third product, and the fourth product; and
determining that the plurality of second curves meet the target condition, in a case that the fifth parameter is not greater than the fourth threshold.

4. The method according to claim 3, wherein determining whether the plurality of second curves meets the target condition according to the data fitting parameter of the plurality of second curves, the second parameter, the third parameter, and the fourth parameter further comprises:

adjusting the plurality of second curves, in the case that the fifth parameter is greater than the fourth threshold, wherein the adjusting comprises at least one of:

adjusting a unit direction vector of a start point of a second curve within a first range;
adjusting a fitting parameter between a second curve and the positioning data covered by such second curve within a second range;
adjusting the curvature between adjacent second curves within a third range,
wherein the first range is a range set for the unit direction vector, the second range is a range set for the fitting parameter, and the third range is a range set for the curvature; and

obtaining the fifth parameter of the adjusted plurality of second curves, and determining whether the adjusted plurality of second curves meets the target condition based on the fifth parameter.

5. The method according to claim 4, wherein adjusting the curvature between adjacent second curves within the third range comprises:

adjusting a first variable and a second variable according to the third range; and
determining a sum of a fifth product and the second variable as a target value of the curvature, wherein the fifth product is a product of the first variable and a sixth parameter, and the sixth parameter is configured to indicate a position of the to-be-determined curvature for the target object.

6. The method according to any one of claims 1 to 4, wherein determining the motion trajectory of the target object based on the plurality of first curves comprises:

obtaining a target angle and a target curvature that are between adjacent second curves, in the case that the plurality of second curves meets the target condition; and
connect the adjacent second curves according to the target angle and the target curvature between the adjacent second curves, to obtain the motion trajectory.

7. The method according to any one of claims 1 to 5, wherein the target object comprises an autonomous vehicle, and after determining the motion trajectory of the target object based on the plurality of first curves, the method further comprises:
adjusting a travelling status of the autonomous vehicle according to the motion trajectory and a target trajectory, to make the autonomous vehicle travel along the target trajectory, wherein the autonomous vehicle travels on the target trajectory after the adjustment, and the target trajectory is a travelling trajectory planned for the autonomous vehicle.

8. The method according to claim 7, wherein adjusting the travelling status of the autonomous vehicle according to the motion trajectory and the target trajectory comprises:

obtaining a travelling speed and an adjustment period for the autonomous vehicle traveling along the motion trajectory;
determining a first position and a second position according to the travelling speed and the adjustment period, wherein the first position is a position which the autonomous vehicle reaches by traveling along the motion trajectory based on the travelling speed and the adjustment period, the second position is a position on the target trajectory, and the second position and the first position have a same coordinate along a first direction; and
determining an acceleration of the autonomous vehicle along a second direction, according to a ratio of twice a coordinate difference to a square of the adjustment period, wherein the coordinate difference is between the second position and the first position along the second direction, and the second direction is different from the first direction;
wherein the travelling status of the autonomous vehicle comprises the acceleration.

9. A storage medium, comprising:

a computer program stored in the storage medium;
wherein the computer program when being executed implements the method according to any one of claims 1 to 8.

10. An electronic device, comprising:

a memory,
a processor, and
a computer program, stored in the memory and executable on the processor;

wherein the processor implements the method according to any one of claims 1 to 8 through the computer program.

**Patentansprüche**

1. Verfahren zum Rekonstruieren einer Bewegungstrajektorie, wobei das Verfahren umfasst:

   Erhalten eines Datensatzes, wobei Positionierungsdaten in dem Datensatz gespeichert sind und die Positionierungsdaten durch Positionieren eines Zielobjekts, während sich das Zielobjekt in Bewegung befindet, erhalten werden;
   Anpassen von Zieldaten in dem Datensatz mit einer Mehrzahl von ersten Kurven, wobei die Zieldaten durch Herausfiltern von Rauschdaten aus dem Datensatz erhalten werden, und die Rauschdaten Positionierungsdaten sind, die weniger genau sind als die Zieldaten; und
   Bestimmen der Bewegungstrajektorie des Zielobjekts basierend auf der Mehrzahl von ersten Kurven;
   und **dadurch gekennzeichnet, dass**:
   das Anpassen von Zieldaten in dem Datensatz mit der Mehrzahl von ersten Kurven umfasst:

   Anpassen der Zieldaten in dem Datensatz mit einer Mehrzahl von zweiten Kurven gemäß einem ersten Parameter, wobei ein erster Parameter so konfiguriert ist, dass er eine Anzahl von Segmenten in der Mehrzahl von zweiten Kurven anzeigt;
   Bestimmen der Mehrzahl von zweiten Kurven als die Mehrzahl von ersten Kurven in einem Fall, in dem die Mehrzahl von zweiten Kurven eine Zielbedingung erfüllt, gemäß einem Datenanpassungsparameter, der einen Grad der Anpassung der mehreren zweiten Kurven anzeigt, einem zweiten Parameter, einem dritten Parameter und einem vierten Parameter; und
   Anpassen des ersten Parameters, Anpassen der Zieldaten in dem Datensatz mit einer neuen Mehrzahl von zweiten Kurven gemäß dem angepassten ersten Parameter, und Zurückkehren zu dem Schritt des Bestimmens, ob die Mehrzahl von zweiten Kurven eine Zielbedingung erfüllt, in einem Fall, dass die Mehrzahl von zweiten Kurven die Zielbedingung nicht erfüllt;
   wobei der zweite Parameter eine Anzahl von Sprüngen in einem Tangentenwinkel an einer Verbindungsstelle zwischen jeweils zwei benachbarten zweiten Kurven ist, die einen ersten Schwellenwert überschreiten; der dritte Parameter eine Anzahl von Sprüngen in einer Krümmung an einer Verbindungsstelle zwischen jeweils zwei benachbarten zweiten Kurven ist, die einen zweiten Schwellenwert überschreiten; der vierte Parameter eine Anzahl von Segmenten in der Mehrzahl von zweiten Kurven ist, von denen eine Länge einen dritten Schwellenwert überschreitet.

2. Verfahren nach Anspruch 1, wobei die zweiten Kurven und die ersten Kurven Eulerkurven sind.

3. Verfahren nach Anspruch 2, wobei das Bestimmen, ob die Mehrzahl von zweiten Kurven die Zielbedingung erfüllt, gemäß dem Datenanpassungsparameter der Mehrzahl von zweiten Kurven, dem zweiten Parameter, dem dritten Parameter und dem vierten Parameter umfasst:

   Erhalten eines ersten Produkts des Datenanpassungsparameters der Mehrzahl von zweiten Kurven und eines ersten Gewichts, eines zweiten Produkts des zweiten Parameters und eines zweiten Gewichts, eines dritten Produkts des dritten Parameters und eines dritten Gewichts, und eines vierten Produkts des vierten Parameters und eines vierten Gewichts, wobei eine Summe des ersten Gewichts, des zweiten Gewichts, des dritten Gewichts und des vierten Gewichts gleich 1 ist;
   Bestimmen, dass die Mehrzahl von zweiten Kurven die Zielbedingung nicht erfüllt, in einem Fall, dass ein fünfter Parameter größer als ein vierter Schwellenwert ist, wobei der fünfte Parameter eine Summe des ersten Produkts, des zweiten Produkts, des dritten Produkts und des vierten Produkts ist; und
   Bestimmen, dass die Mehrzahl von zweiten Kurven die Zielbedingung erfüllt, in einem Fall, dass der fünfte Parameter nicht größer als der vierte Schwellenwert ist.

4. Verfahren nach Anspruch 3, wobei das Bestimmen, ob die Mehrzahl von zweiten Kurven die Zielbedingung erfüllt, gemäß dem Datenanpassungsparameter der Mehrzahl von zweiten Kurven, dem zweiten Parameter, dem dritten Parameter und dem vierten Parameter weiterhin umfasst:

   Anpassen der Mehrzahl von zweiten Kurven in dem Fall, dass der fünfte Parameter größer als der vierte Schwellenwert ist, wobei das Anpassen mindestens eines der folgenden Merkmale umfasst:

Anpassen eines Einheitsrichtungsvektors eines Startpunkts einer zweiten Kurve innerhalb eines ersten Bereichs;

Anpassen eines Anpassungsparameters zwischen einer zweiten Kurve und den von dieser zweiten Kurve erfassten Positionierungsdaten innerhalb eines zweiten Bereichs;

Anpassen der Krümmung zwischen benachbarten zweiten Kurven innerhalb eines dritten Bereichs, wobei der erste Bereich ein Bereich ist, der für den Einheitsrichtungsvektor eingestellt ist, der zweite Bereich ein Bereich ist, der für den Anpassungsparameter eingestellt ist, und der dritte Bereich ein Bereich ist, der für die Krümmung eingestellt ist; und

Erhalten des fünften Parameters der angepassten Mehrzahl von zweiten Kurven, und Bestimmen, ob die angepasste Mehrzahl von zweiten Kurven die Zielbedingung erfüllt basierend auf dem fünften Parameter.

5. Verfahren nach Anspruch 4, wobei die das Anpassen der Krümmung zwischen benachbarten zweiten Kurven innerhalb des dritten Bereichs umfasst:

Anpassen einer ersten Variable und einer zweiten Variablen gemäß dem dritten Bereich; und

Bestimmen einer Summe aus einem fünften Produkt und der zweiten Variablen als ein Zielwert der Krümmung, wobei das fünfte Produkt ein Produkt aus der ersten Variablen und einem sechsten Parameter ist, und der sechste Parameter so konfiguriert ist, dass er eine Position der zu bestimmenden Krümmung für das Zielobjekt anzeigt.

6. Verfahren nach einem der Ansprüche 1 bis 4, wobei das Bestimmen der Bewegungstrajektorie des Zielobjekts basierend auf der Mehrzahl von ersten Kurven umfasst:

Erhalten eines Zielwinkels und einer Zielkrümmung, die zwischen benachbarten zweiten Kurven liegen, in dem Fall, dass die Mehrzahl von zweiten Kurven die Zielbedingung erfüllt; und

Verbinden der benachbarten zweiten Kurven gemäß dem Zielwinkel und der Zielkrümmung zwischen den benachbarten zweiten Kurven, um die Bewegungstrajektorie zu erhalten.

7. Verfahren nach einem der Ansprüche 1 bis 5, wobei das Zielobjekt ein autonomes Fahrzeug umfasst, und nach dem Bestimmen der Bewegungstrajektorie des Zielobjekts basierend auf der Mehrzahl von ersten Kurven, das Verfahren des Weiteren umfasst:

Anpassen eines Fahrstatus des autonomen Fahrzeugs gemäß der Bewegungstrajektorie und einer Zieltrajektorie, um das autonome Fahrzeug entlang der Zieltrajektorie fahren zu lassen, wobei das autonome Fahrzeug nach der Anpassung auf der Zieltrajektorie fährt und die Zieltrajektorie eine für das autonome Fahrzeug geplante Fahrttrajektorie ist.

8. Verfahren nach Anspruch 7, wobei das Anpassen des Fahrstatus des autonomen Fahrzeugs gemäß der Bewegungstrajektorie und der Zieltrajektorie umfasst:

Erhalten einer Fahrgeschwindigkeit und eines Anpassungszeitraums für das autonome Fahrzeug, das sich entlang der Bewegungstrejektorie bewegt;

Bestimmen einer ersten Position und einer zweiten Position gemäß der Fahrgeschwindigkeit und des Anpassungszeitraums, wobei die erste Position eine Position ist, die das autonome Fahrzeug durch Fahren entlang der Bewegungstrajektorie basierend auf der Fahrgeschwindigkeit und der Anpassungsperiode erreicht, die zweite Position eine Position auf der Zieltrajektorie ist, und die zweite Position und die erste Position eine gleiche Koordinate entlang einer ersten Richtung haben; und

Bestimmen einer Beschleunigung des autonomen Fahrzeugs entlang einer zweiten Richtung gemäß einem Verhältnis von zweimal einer Koordinatendifferenz zu einem Quadrat der Anpassungszeitdauer, wobei die Koordinatendifferenz zwischen der zweiten Position und der ersten Position entlang der zweiten Richtung ist, und die zweite Richtung sich von der ersten Richtung unterscheidet;

wobei der Fahrstatus des autonomen Fahrzeugs die Beschleunigung umfasst.

9. Speichermedium, umfassend:

ein auf dem Speichermedium gespeichertes Computerprogramm;

wobei das Computerprogramm, wenn es ausgeführt wird, das Verfahren nach einem der Ansprüche 1 bis 8 implementiert.

10. Elektronisches Gerät, umfassend:

einen Speicher,
einen Prozessor, und
ein Computerprogramm, das im Speicher gespeichert und auf dem Prozessor ausführbar ist;
wobei der Prozessor das Verfahren nach einem der Ansprüche 1 bis 8 durch das Computerprogramm ausführt.

**Revendications**

1. Procédé de reconstruction d'une trajectoire de mouvement, dans lequel le procédé comprend:

obtenir un ensemble de données, dans lequel des données de positionnement sont stockées dans l'ensemble de données, et les données de positionnement sont obtenues en positionnant un objet cible pendant que l'objet cible est en mouvement;
ajuster des données cibles dans l'ensemble de données avec une pluralité de premières courbes, dans lequel les données cibles sont obtenues en filtrant des données de bruit hors de l'ensemble de données, et les données de bruit sont des données de positionnement qui sont moins précises que les données cibles; et
déterminer la trajectoire de mouvement de l'objet cible sur la base de la pluralité de premières courbes;
et **caractérisé par le fait que**:
l'ajustement de données cibles dans l'ensemble de données avec la pluralité de premières courbes comprend:

ajuster les données cibles dans l'ensemble de données avec une pluralité de deuxièmes courbes, selon un premier paramètre, dans lequel un premier paramètre est configuré pour indiquer une quantité de segments dans la pluralité de deuxièmes courbes;
déterminer la pluralité de deuxièmes courbes comme la pluralité de premières courbes, dans un cas où la pluralité de deuxièmes courbes satisfait à une condition cible selon un paramètre d'ajustement de données indiquant un degré d'ajustement des multiples deuxièmes courbes, un deuxième paramètre, un troisième paramètre et un quatrième paramètre; et
ajuster le premier paramètre, ajuster les données cibles dans l'ensemble de données avec une nouvelle pluralité de deuxièmes courbes selon le premier paramètre ajusté, et retourner à l'étape consistant à déterminer si la pluralité de deuxièmes courbes satisfait à une condition cible, dans un cas où la pluralité de deuxièmes courbes ne satisfait pas à la condition cible;
dans lequel le deuxième paramètre est une quantité de sauts, dans un angle tangent au niveau d'un joint entre respectivement deux deuxièmes courbes adjacentes qui dépassent une première valeur de seuil; le troisième paramètre est une quantité de sauts, dans une courbure au niveau d'un joint entre respectivement deux deuxièmes courbes adjacentes qui dépassent une deuxième valeur de seuil; le quatrième paramètre est une quantité de segments dans la pluralité de deuxièmes courbes, dont une longueur dépasse une troisième valeur de seuil.

2. Procédé selon la revendication 1, dans lequel les deuxièmes courbes et les premières courbes sont des courbes d'Euler.

3. Procédé selon la revendication 2, dans lequel l'action de déterminer si la pluralité de deuxièmes courbes satisfait à la condition cible selon le paramètre d'ajustement de données de la pluralité de deuxièmes courbes, le deuxième paramètre, le troisième paramètre et le quatrième paramètre comprend:

obtenir un premier produit du paramètre d'ajustement de données de la pluralité de deuxièmes courbes et d'un premier poids, un deuxième produit du deuxième paramètre et d'un deuxième poids, un troisième produit du troisième paramètre et d'un troisième poids, et un quatrième produit du quatrième paramètre et d'un quatrième poids dans lequel une somme du premier poids, du deuxième poids, du troisième poids et du quatrième poids est égale à 1 ;
déterminer que la pluralité de deuxièmes courbes ne satisfait pas à la condition cible, dans un cas où un cinquième paramètre est supérieur à une quatrième valeur de seuil, dans lequel le cinquième paramètre est une somme du premier produit, du deuxième produit, du troisième produit et du quatrième produit; et

déterminer que la pluralité de deuxièmes courbes satisfait à la condition cible, dans un cas où le cinquième paramètre n'est pas supérieur à la quatrième valeur de seuil.

4. Procédé selon la revendication 3, dans lequel l'action de déterminer si la pluralité de deuxièmes courbes satisfait à la condition cible, selon le paramètre d'ajustement de données de la pluralité de deuxièmes courbes, le deuxième paramètre, le troisième paramètre et le quatrième paramètre comprend:

ajuster la pluralité de deuxièmes courbes, dans le cas où le cinquième paramètre est supérieur à la quatrième valeur de seuil, dans lequel l'ajustement comprend au moins l'un de ce qui suit:

ajuster un vecteur de direction unitaire d'un point de départ d'une deuxième courbe dans une première plage;
ajuster un paramètre d'ajustement entre une deuxième courbe et les données de positionnement couvertes par cette deuxième courbe dans une deuxième plage;
ajuster la courbure entre des deuxièmes courbes adjacentes dans une troisième plage,
dans lequel la première plage est une plage définie pour le vecteur de direction unitaire, la deuxième plage est une plage définie pour le paramètre d'ajustement, et la troisième plage est une plage définie pour la courbure; et

obtenir le cinquième paramètre de la pluralité ajustée de deuxièmes courbes, et déterminer si la pluralité ajustée de deuxièmes courbes satisfait à la condition cible sur la base du cinquième paramètre.

5. Procédé selon la revendication 4, dans lequel l'ajustement de la courbure entre des deuxièmes courbes adjacentes dans la troisième plage comprend:

ajuster une première variable et une deuxième variable selon la troisième plage; et
déterminer une somme d'un cinquième produit et de la deuxième variable en tant que valeur cible de la courbure, dans lequel le cinquième produit est un produit de la première variable et d'un sixième paramètre, et le sixième paramètre est configuré pour indiquer une position de la courbure à déterminer pour l'objet cible.

6. Procédé selon l'une quelconque des revendications 1 à 4, dans lequel la détermination de la trajectoire de mouvement de l'objet cible sur la base de la pluralité de premières courbes comprend:

obtenir un angle cible et une courbure cible qui se trouvent entre des deuxièmes courbes adjacentes, dans le cas où la pluralité de deuxièmes courbes satisfait la condition cible; et
relier les deuxièmes courbes adjacentes selon l'angle cible et la courbure cible entre les deuxièmes courbes adjacentes, pour obtenir la trajectoire de mouvement.

7. Procédé selon l'une quelconque des revendications 1 à 5, dans lequel l'objet cible comprend un véhicule autonome, et après avoir déterminé la trajectoire de mouvement de l'objet cible sur la base de la pluralité de premières courbes, le procédé comprend en outre:
ajuster un état de déplacement du véhicule autonome selon la trajectoire de mouvement et une trajectoire cible, pour amener le véhicule autonome à se déplacer le long de la trajectoire cible, dans lequel le véhicule autonome se déplace sur la trajectoire cible après l'ajustement, et la trajectoire cible est une trajectoire de déplacement prévue pour le véhicule autonome.

8. Procédé selon la revendication 7, dans lequel l'ajustement de l'état de déplacement du véhicule autonome en fonction de la trajectoire de mouvement et de la trajectoire cible comprend:

obtenir une vitesse de déplacement et une période d'ajustement pour le véhicule autonome se déplaçant le long de la trajectoire de mouvement;
déterminer une première position et une deuxième position en fonction de la vitesse de déplacement et de la période d'ajustement, dans lequel la première position est une position que le véhicule autonome atteint en se déplaçant le long de la trajectoire de déplacement sur la base de la vitesse de déplacement et de la période d'ajustement, la deuxième position est une position sur la trajectoire cible, et la deuxième position et la première position ont une même coordonnée selon une première direction; et
déterminer une accélération du véhicule autonome suivant une deuxième direction, selon un rapport de deux fois une différence de coordonnées au carré de la période d'ajustement, dans lequel la différence de coordonnées se situe entre la deuxième position et la première position suivant la deuxième direction, et la deuxième direction est différente de la première direction;

dans lequel l'état de déplacement du véhicule autonome comprend l'accélération.

9. Support de stockage, comprenant

un programme informatique stocké sur le support de stockage;

dans lequel, lors de son exécution, le programme informatique met en oeuvre le procédé selon l'une quelconque des revendications 1 à 8.

10. Appareil électronique comprenant:

une mémoire,

un processeur, et

un programme informatique qui est stocké dans la mémoire et est exécutable sur le processeur;

dans lequel le processeur met en oeuvre le procédé selon l'une quelconque des revendications 1 à 8 par l'intermédiaire du programme informatique.

Database 105

S202.Obtain
a data set

User terminal 103

S206.Determine a motion
track of a target object based
on the multiple first curves

Map service    S204.Fit positioning data
with multiple first curves

Server 101

Figure 1

Obtain a data set, wherein positioning data is stored in the data set, and the positioning data is obtained by positioning a target object in movement of the target object — S202

Fit a first part of the positioning data in the data set with multiple first curves, where each first curve is obtained by fitting multiple pieces of the positioning data, and the multiple pieces of the position of data are temporally adjacent in collection — S204

Determine the motion trajectory of the target object based on the multiple first curves — S206

## Figure 2

Vehicle trajectory points after GPS/IMU calculation

Kalman filtering — S302

Optimize a quantity of segments and a curve parameter of each segment

Adaptive segmented Euler curve fitting — S304

Optimal trajectory

## Figure 3

Dots after
calculation

Kalman
filtering result

Figure 4

501

503

Figure 5

(vx, vy)

Euler curve

(x0, y0)

Figure 6

Figure 7

Motion trajectory

Figure 8

Figure 9

User terminal

Obtaining unit 901

Fitting unit 903

Determining unit 905

Figure 10

Input and output device 1007

Processor
1001

1005

Memory
1003

Figure 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810886856
- GB 2526806 A

- WO 2007010317 A1

**Non-patent literature cited in the description**

- **VISHEN RAHUL et al.** GPS Data Intropolation: Bezier Vs. Biarcs for Tracing Vehicle Trajectory. *Advances in Intelligent Data Analysis XIX,* 20 June 2015